# EUROPÄISCHE PATENTSCHRIFT

(11) **EP 3 298 278 B1**
(45) Veröffentlichungstag und Bekanntmachung des Hinweises auf die Patenterteilung: **15.08.2018**
(21) Anmeldenummer: 16706671.1
(22) Anmeldetag: 29.02.2016
(51) Int. Cl.: F04B 39/12, F04B 39/00, F04B 39/02, F16F 15/08, F16F 1/12, B32B 25/00

(54) **KÄLTEMITTELVERDICHTER**
REFRIGERANT COMPRESSOR
COMPRESSEUR À RÉFRIGÉRANT

(30) Priorität: 22.05.2015 AT 500952015 U
(43) Veröffentlichungstag der Anmeldung: 28.03.2018
(73) Patentinhaber: Nidec Global Appliance Germany GmbH, 24939 Flensburg (DE)
(72) Erfinder: RESCH, Reinhard, 8330 Feldbach (AT)
(74) Vertreter: KLIMENT & HENHAPEL
(86) Internationale Anmeldenummer: PCT/EP2016/054235
(87) Internationale Veröffentlichungsnummer: WO 2016/188644

(56) Entgegenhaltungen:
- GB-A- 2 242 723
- US-A- 3 030 056
- US-A- 3 531 069

## Beschreibung

### GEBIET DER ERFINDUNG

Die vorliegende Erfindung bezieht sich auf einen Kältemittelverdichter, umfassend ein hermetisch dichtes Gehäuse sowie eine Antriebseinheit mit einer Kolben-Zylinder-Einheit zur zyklischen Verdichtung eines Kältemittels und einem Elektromotor zum Antrieb der Kolben-Zylinder-Einheit; wobei die Antriebseinheit im Inneren des Gehäuses angeordnet ist und mittels mindestens eines Federelements an mindestens einem Lagerungsbereich des Gehäuses, vorzugsweise am Gehäuseboden, lagernd angebunden ist; wobei ein erstes Lagerungselement und ein zweites Lagerungselement vorgesehen sind; wobei eines der beiden Lagerungselemente mit der Antriebseinheit und das andere der beiden Lagerungselemente mit dem Lagerungsbereich verbunden ist;
wobei das erste Lagerungselement und/oder das zweite Lagerungselement von mindestens einem Federelement umgeben sind; wobei das erste Lagerungselement hülsenförmig ausgebildet ist und eine Innenwand aufweist und wobei das zweite Lagerungselement einen bolzenförmigen Abschnitt aufweist, wobei der bolzenförmige Abschnitt zumindest abschnittsweise im ersten Lagerungselement aufgenommen ist, wodurch ein Überlappungsbereich ausgebildet ist, in welchem Überlappungsbereich ein Spalt zwischen dem bolzenförmigen Abschnitt des zweiten Lagerungselements und der Innenwand des ersten Lagerungselements ausgebildet ist.

### STAND DER TECHNIK

Bei Kältemittelverdichtern, die eine in einem hermetisch dichten Gehäuse angeordnete Antriebseinheit mit einer Kolben-Zylinder-Einheit und einem für den Antrieb der Kolben-Zylinder-Einheit vorgesehenen Elektromotor aufweisen, ist die Antriebseinheit üblicherweise über Federn am Gehäuse lagernd angebunden. Sinn und Zweck dieser Lagerung ist die Dämpfung von Auslenkungen bzw. Schwingungen der Antriebseinheit, um Vibrationen und damit einhergehende störende Geräusche zu vermeiden bzw. zu dämpfen. Zu besonders starken Auslenkungen der Antriebseinheit kommt es insbesondere bei Anlauf- und Abschaltvorgängen. Um die die Auslenkungen bei diesen Anlauf- und Abschaltvorgängen zu begrenzen, werden zur Lagerung Druckfedern verwendet, die gemäß dem Stand der Technik auf konische Federbolzen aufgepresst sind. Dadurch wird bei großen Auslenkungen der Feder in Querrichtung durch das Anlegen der Federwindungen an die Federbolzen eine progressive Federkennlinie erzielt.

Diese Lösung ist jedoch nur für Druckfedern mit relativ geringer Querbeanspruchung geeignet, da bei sehr großen Querkräften bzw. Auslenkungen, wie sie vor allem bei drehzahlgeregelten Kompressoren mit Außenläufermotor vorkommen, einzelne Federwindungen über den Federbolzen springen können. Dadurch kommt es einerseits zu einem Einbruch der Kraft in der Federkennlinie, was zu größeren Auslenkungen führt. Andererseits entstehen durch die ruckartige Entlastung beim Überspringen der Federwindungen hochfrequente Schwingungen ("Federknacken"), welche sich akustisch negativ auswirken. Zusätzlich entstehen hohe Spannungsamplituden mit mehreren Lastwechseln, welche die Dauerfestigkeit der Feder verringern. Daher müssen derart beanspruchte Druckfedern mit einem Sicherheitsfaktor von über 10 bezogen auf die statische Beanspruchung durch die Gewichtskraft der Antriebseinheit ausgelegt werden, was sich jedoch nachteilig auf die Dämpfung von Vibrationen und damit von unerwünschter Schallentwicklung auswirkt.

Aus der GB 2242753 A ist zur lagernden Anbindung einer Antriebseinheit an Lagerungsbereiche im Inneren eines Gehäuses bekannt, Lagerelemente zu verwenden, die Schraubenfedern umfassen, wobei innerhalb der Schraubenfedern und an diesen anliegend jeweils ein zylinderförmiges, vibrationsabsorbierendes Element aus einem viskoelastischen Material angeordnet ist und/oder wobei die Schraubenfedern jeweils von einem an diesen anliegenden vibrationsabsorbierenden Element aus einem viskoelastischen Material umgeben sind.

### AUFGABE DER ERFINDUNG

Es ist daher Aufgabe der vorliegenden Erfindung einen Kältemittelverdichter zur Verfügung zu stellen, der die oben genannten Nachteile vermeidet. Insbesondere soll durch eine erfindungsgemäße Lagerung einer Antriebseinheit des Kältemittelverdichters eine besonders effiziente Schalldämpfung erzielt werden.

### DARSTELLUNG DER ERFINDUNG

Die zugrundeliegende Idee der vorliegenden Erfindung ist es, durch eine geeignete konstruktive Ausführung von Lagerungselementen die Druck- und/oder Zugfedern selbst zu entlasten, sodass eine wesentlich günstigere akustische Auslegung möglich ist. Dies wird erfindungsgemäße durch ein Lagerungselement erreicht, das einen bolzenförmigen Abschnitt aufweist, welcher bolzenförmige Abschnitt zumindest abschnittsweise in einem hülsenförmigen Abschnitt eines anderen Lagerungselements aufgenommen ist. Da eines der beiden Lagerungselemente mit der Antriebseinheit verbunden ist und das andere der beiden Lagerungselemente mit einem Lagerungsbereich eines Gehäuses des Kältemittelverdichters, wird somit die Auslenkung der Antriebseinheit in allen Querrichtungen - und nicht etwa nur in einer Querrichtung oder in einigen wenigen Querrichtungen - begrenzt und die Feder selbst entlastet. Jede Querrichtung steht dabei quer, vorzugsweise normal zur axialen Richtung, die sich aus der Längserstreckung des bolzenförmigen Abschnitts ergibt.

Die Druck- oder Zugfeder muss daher nicht mehr um bis zu einem Faktor 10 oder mehr gegenüber der statischen Belastung überdimensioniert werden. Die maximale Belastung der Feder wird bei der erfindungsgemäßen Ausführung nur durch das Spiel des bolzenförmigen Abschnitts des einen Lagerungselements innerhalb des hülsenförmigen Abschnitts des anderen Lagerungselements sowie durch die Quersteifigkeit der Feder bestimmt. Weiters sei betont, dass es dabei nur auf die Relativbewegung zwischen den beiden Lagerungselementen ankommt. Je geringer die Quersteifigkeit der Feder ist, desto geringer ist auch die maximal mögliche Belastung. Durch die erfindungsgemäße Begrenzung der Auslenkung in der Nähe der Feder sind zudem die Einflüsse von Fertigungstoleranzen gering.

Entsprechend ist es bei einem Kältemittelverdichter, umfassend ein hermetisch dichtes Gehäuse sowie eine Antriebseinheit mit einer Kolben-Zylinder-Einheit zur zyklischen Verdichtung eines Kältemittels und einem Elektromotor zum Antrieb der Kolben-Zylinder-Einheit; wobei die Antriebseinheit im Inneren des Gehäuses angeordnet ist und mittels mindestens eines Federelements an mindestens einem Lagerungsbereich des Gehäuses, vorzugsweise am Gehäuseboden, lagernd angebunden ist; wobei ein erstes Lagerungselement und ein zweites Lagerungselement vorgesehen sind; wobei eines der beiden Lagerungselemente mit der Antriebseinheit und das andere der beiden Lagerungselemente mit dem Lagerungsbereich verbunden ist; wobei das erste Lagerungselement und/oder das zweite Lagerungselement von mindestens einem Federelement umgeben sind, erfindungsgemäß vorgesehen, dass das erste Lagerungselement hülsenförmig ausgebildet ist und eine Innenwand aufweist und dass das zweite Lagerungselement einen bolzenförmigen Abschnitt aufweist, wobei der bolzenförmige Abschnitt zumindest abschnittsweise im ersten Lagerungselement aufgenommen ist, wodurch ein Überlappungsbereich ausgebildet ist, in welchem Überlappungsbereich ein Spalt zwischen dem bolzenförmigen Abschnitt des zweiten Lagerungselements und der Innenwand des ersten Lagerungselements ausgebildet ist.

Hierdurch wird außerdem auch eine verbesserte Raumausnutzung erreicht, die eine Verkleinerung des Gehäusevolumens - typischerweise um ca. 0,15 l - im Vergleich zu aus dem Stand der Technik bekannten Kältemittelkompressoren erlaubt. Weiters weist die erfindungsgemäße Lösung keinerlei Nachteile im Hinblick auf die Dauerfestigkeit der Lagerung der Antriebseinheit sowie des gesamten Kältemittelverdichters auf.

Insbesondere kann das erste Lagerungselement mit der Antriebseinheit verbunden sein und das zweite Lagerungselement mit dem Lagerungsbereich.

Um zur Vibrationsdämpfung eine gewisse Auslenkung der Antriebseinheit zuzulassen und gleichzeitig die gewünschte Auslenkungsbegrenzung bei mechanischer Stabilität der Lagerung zu erzielen, ist die Dimensionierung des Spalts von Bedeutung. Eine radiale Spaltbreite kann dabei in Relation zum Durchmesser der Innenwand gesetzt werden, insbesondere dann, wenn in radialer Richtung gesehen die Innenwand unmittelbar nach dem bolzenförmigen Abschnitt angeordnet ist. Denkbar sind aber auch Ausführungsvariante, wo das Federelement zwischen der Innenwand und dem bolzenförmigen Abschnitt angeordnet ist. Der Spalt muss in diesem Fall eine hinreichen große radiale Spaltbreite aufweisen, um neben der Aufnahme des Federelements auch noch eine Querbewegung zuzulassen. Gemäß dem Ergebnis aufwendiger Versuchsreichen ist es bei einer bevorzugten Ausführungsform des erfindungsgemäßen Kältemittelverdichters vorgesehen, dass der Spalt zwischen 20% und 60%, vorzugsweise zwischen 30% und 50%, insbesondere zwischen 35% und 45%, des Durchmessers der Innenwand einnimmt.

Um eine besonders einfache und platzsparende Fixierung des Federelements zu ermöglichen, ist es bei einer bevorzugten Ausführungsform des erfindungsgemäßen Kältemittelverdichters vorgesehen, dass das erste Lagerungselement zumindest abschnittsweise kraftschlüssig mit dem Federelement verbunden ist.

Um einerseits eine besonders stabile Verbindung des Federelements mit dem ersten Lagerungselement zu erzielen und andererseits den Zusammenbau der Lagerung bzw. des Kältemittelverdichters zu vereinfachen, ist es bei einer bevorzugten Ausführungsform des erfindungsgemäßen Kältemittelverdichters vorgesehen, dass ein erster Endabschnitt des Federelements zwischen dem ersten Lagerungselement und einer am ersten Lagerungselement angeordneten Spannhülse verspannt ist.

Um ein mechanisch besonders stabiles zweites Lagerungselement zu erhalten, ist es bei einer bevorzugten Ausführungsform des erfindungsgemäßen Kältemittelverdichters vorgesehen, dass der bolzenförmige Abschnitt von einem ersten Endabschnitt des zweiten Lagerungselements ausgebildet ist, wobei ein zweiter Endabschnitt des zweiten Lagerungselements einen im Vergleich zum bolzenförmigen Abschnitt größeren Durchmesser aufweist. Vorzugsweise sind der bolzenförmige Abschnitt und der erste Endabschnitt des zweiten Lagerungselements einstückig ausgebildet. Besonders bevorzugt ist das gesamte zweite Lagerungselement einstückig ausgebildet.

Bei Auslenkungen der Antriebseinrichtung kann es zu einem Kontakt von Teilen des zweiten Lagerungselements mit dem ersten Lagerungselement kommen, welche Teile nicht auf dem bolzenförmigen Abschnitt liegen. Um in diesem Fall ein Verhaken der beiden Lagerungselemente auszuschließen und ein Abgleiten der beiden Lagerungselemente aneinander zu ermöglichen, ist es bei einer bevorzugten Ausführungsform des erfindungsgemäßen Kältemittelverdichters vorgesehen, dass das zweite Lagerungselement einen Übergangsabschnitt aufweist, welcher zwischen dem bolzenförmigen Abschnitt und dem zweiten Endabschnitt angeordnet ist, in welchem Übergangsabschnitt sich der Durchmesser von einem kleinsten Wert im Bereich des bolzenförmigen Abschnitts, vorzugsweise konisch, monoton bis zu einem größten Wert im Bereich des zweiten Endabschnitts des zweiten Lagerungselements vergrößert.

Der im Vergleich zum bolzenförmigen Abschnitt größere Durchmesser des zweiten Endabschnitts des zweiten Lagerungselements bietet eine einfache Möglichkeit, das Federelement am zweiten Lagerungselement zu fixieren, vorzugsweise indem das Federelement über den zweiten Endabschnitt gezogen ist und sich aufgrund der eigenen Elastizität bzw. Eigenspannung gegen den zweiten Endabschnitt presst. Daher ist es bei einer bevorzugten Ausführungsform des erfindungsgemäßen Kältemittelverdichters vorgesehen, dass der zweite Endabschnitt des zweiten Lagerungselements kraftschlüssig mit dem Federelement verbunden ist.

Um auch Auslenkungen der Antriebseinheit in axialer Richtung, vorzugsweise in Druckrichtung des Federelements zu begrenzen, ist es bei einer bevorzugten Ausführungsform des erfindungsgemäßen Kältemittelverdichters vorgesehen, dass der erste Endabschnitt des zweiten Lagerungselements durch eine, vorzugsweise ebene, erste Anschlagfläche zum Kontakt mit einer zweiten Anschlagsfläche in axialer Richtung begrenzt ist.

Um die zweite Anschlagsfläche auf konstruktiv besonders einfache Art und Weise realisieren zu können, ist es bei einer bevorzugten Ausführungsform des erfindungsgemäßen Kältemittelverdichters vorgesehen, dass die zweite Anschlagsfläche vom ersten Lagerungselement oder von der Antriebseinheit ausgebildet ist, wobei die erste Anschlagsfläche und die zweite Anschlagsfläche in einer Betriebsposition voneinander beabstandet sind.

Um eine Möglichkeit zu schaffen, die Auslenkung der Antriebseinheit auf konstruktiv einfache Art und Weise in axialer Richtung vollständig, d.h. sowohl in Druckrichtung als auch in Zugrichtung einer einzelnen Feder, begrenzen zu können, ist es bei einer bevorzugten Ausführungsform des erfindungsgemäßen Kältemittelverdichters vorgesehen, dass ein erstes Federelement zwischen einem zweiten Endabschnitt des zweiten Lagerungselements und dem ersten Lagerungselement verspannt ist, dass ein zweites Federelement zwischen einem ersten Endabschnitt des zweiten Lagerungselements und dem ersten Lagerungselement verspannt ist und dass der bolzenförmige Abschnitt in einem zwischen dem erstem Endabschnitt und dem zweitem Endabschnitt liegenden Abschnitt ausgebildet ist.

Vorzugsweise kann das erste Lagerungselement somit zwischen dem ersten und dem zweiten Endabschnitt des zweiten Lagerungselements angeordnet werden, wobei das erste Lagerungselement bei einer Auslenkung in axialer Richtung sowohl in der einen als auch in der anderen Richtung am zweiten Lagerungselement anschlagen kann, und umgekehrt.

Um hinsichtlich der Begrenzung der Auslenkung in Querrichtung eine mechanisch besonders stabile Ausführung zu realisieren, ist es bei einer besonders bevorzugten Ausführungsform des erfindungsgemäßen Kältemittelverdichters vorgesehen, dass das erste Lagerungselement in axialer Richtung vollständig vom bolzenförmigen Abschnitt durchquert ist.

Um eine besonders stabile Anbindung des ersten Lagerungselements an die Antriebseinheit auf konstruktiv einfache Art und Weise zu ermöglichen, ist es bei einer besonders bevorzugten Ausführungsform des erfindungsgemäßen Kältemittelverdichters vorgesehen, dass das erste Lagerungselement ein auskragendes Trägerelement aufweist, welches Trägerelement mit der Antriebseinheit verbunden ist. Bei einer bevorzugten Ausführungsform des erfindungsgemäßen Kältemittelverdichters ist es vorgesehen, dass die Innenwand des ersten Lagerungselements und/oder der bolzenförmige Abschnitt zumindest abschnittsweise mit einer viskoelastischen Schicht versehen sind. Hierdurch kann bei allen Ausführungsformen das Geräuschniveau weiter reduziert werden. Insbesondere kann hierdurch die direkte Kontaktierung des bolzenförmigen Abschnitts mit einem anderen Element vermieden werden. Wenn beispielsweise die Lagerungselemente aus Metall gefertigt sind, werden somit störende metallische Anschlagsgeräusche auf diese Art und Weise reduziert bzw. vermieden.

Weiterhin kann die Geräuschentwicklung insbesondere bei Anlauf- und Abschaltvorgängen nochmals reduziert werden, und gleichzeitig kann die Menge des eingesetzten viskoelastischen Materials relativ gering gehalten werden.

Bei einer bevorzugten Ausführungsform des erfindungsgemäßen Kältemittelverdichters ist es vorgesehen, dass das erste Lagerungselement aus einem viskoelastischen oder flexiblen Material gefertigt ist. Hierdurch wird sichergestellt, dass die relativ geringe Quersteifigkeit des Federelements nicht durch das erste Lagerungselement negativ beeinflusst wird.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: einen Schnitt durch einen erfindungsgemäßen Kältemittelverdichter
- Fig. 2: eine vergrößerte Darstellung des Details A aus Fig. 1
- Fig. 3: eine schematische Darstellung einer weiteren Ausführungsform des erfindungsgemäßen Kältemittelverdichters, analog zu Fig. 2
- Fig. 4: eine schematische Darstellung einer weitere Ausführungsform des erfindungsgemäßen Kältemittelverdichters, analog zu Fig. 2
- Fig. 5: eine schematische Darstellung einer weitere Ausführungsform des erfindungsgemäßen Kältemittelverdichters, analog zu Fig. 2
- Fig. 6: eine schematische Darstellung einer weitere Ausführungsform des erfindungsgemäßen Kältemittelverdichters, analog zu Fig. 2
- Fig. 7: eine schematische Darstellung eines alternativen Ausführungsbeispiels eines Kältemittelverdichters, analog zu Fig. 2

### WEGE ZUR AUSFÜHRUNG DER ERFINDUNG

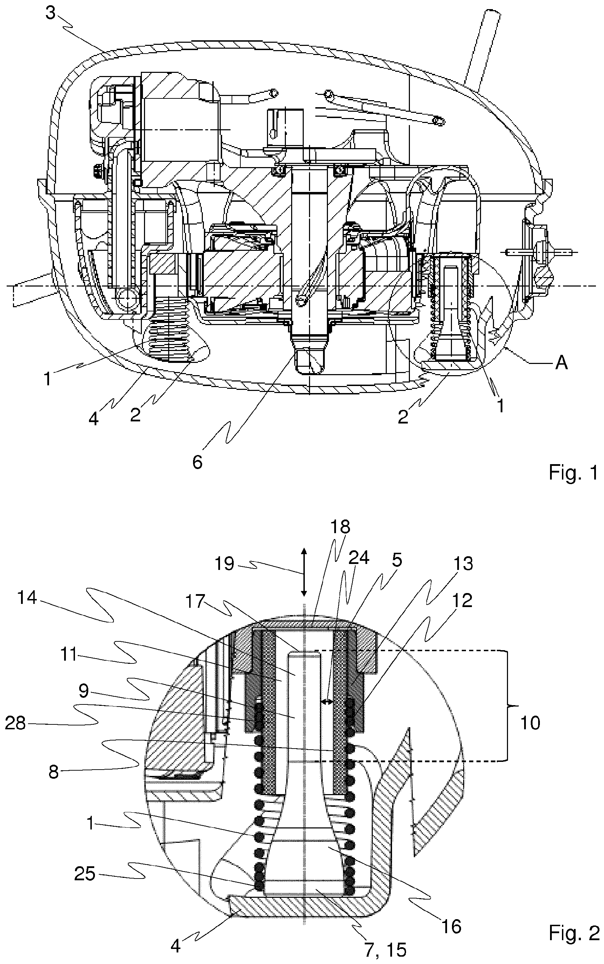

In Fig. 1 ist eine Ausführungsform eines erfindungsgemäßen Kältemittelverdichters in einer Schnittansicht dargestellt. Der Kältemittelverdichter umfasst eine Antriebseinheit 6 mit einer Kolben-Zylinder-Einheit zur zyklischen Verdichtung eines Kältemittels und einem Elektromotor zum Antrieb der Kolben-Zylinder-Einheit. Die Antriebseinheit 6 ist in einem hermetisch dichten Gehäuse 3 angeordnet. Das Gehäuse 3 weist einen Gehäuseboden 4 mit Lagerungsbereichen 2 auf. Die Antriebseinheit 6 ist an den Lagerungsbereichen 2 mittels Federelementen 1 lagernd angebunden, um Vibrationen bzw. Auslenkungen der Antriebseinheit 6 zu dämpfen, die während des Betriebs - und hier besonders stark beim Anlaufen und Abschalten bzw. Herunterfahren der Antriebseinheit 6 - auftreten und störende Geräusche verursachen.

Erfindungsgemäß können Federelemente 1 mit einer relativ geringen Quersteifigkeit verwendet werden, was eine im Vergleich zum Stand der Technik, wo sehr steife Federelemente eingesetzt werden müssen, wesentlich günstigere akustische Auslegung ermöglicht. D.h. störende Geräusche können reduziert werden. Dies wird erreicht, indem die mögliche Auslenkung der Antriebseinheit 6 in sämtlichen Querrichtung durch die erfindungsgemäße Lagerung bzw. Anbindung der Antriebseinheit 6 an die Lagerbereiche 2 begrenzt wird.

Fig. 2 zeigt hierzu eine vergrößerte Ansicht des Details A aus Fig. 1. Erfindungsgemäß ist ein erstes Lagerungselement 5 vorgesehen sowie ein zweites Lagerungselement 7. Das erste Lagerungselement 5 ist in der gezeigten Ausführungsform mit der Antriebseinheit 6 verbunden und das zweite Lagerungselement 7 mit dem Lagerungsbereich 2 bzw. dem Gehäuseboden 4. Das erste Lagerungselement 5 ist hülsenförmig, mit einer Innenwand 8 ausgebildet und weist im Wesentlichen die Form eines Hohlzylinders auf, wobei die Innenwand 8 der inneren Mantelfläche des Hohlzylinders entspricht. Das zweite Lagerungselement 7 weist einen bolzenförmigen Abschnitt 9 auf, der zumindest abschnittsweise im ersten Lagerungselement 5 angeordnet bzw. aufgenommen ist. Hierdurch wird ein Überlappungsbereich 10 ausgebildet, in welchem der bolzenförmige Abschnitt 9 mit dem ersten Lagerungselement 5 bzw. mit der Innenwand 8 des ersten Lagerungselements 5 in axialer Richtung 19 überlappt. Im Ausführungsbeispiel der Fig. 2 ist der bolzenförmige Abschnitt 9 durch einen ersten Endabschnitt 14 des zweiten Lagerungselements 7 ausgebildet.

Um Auslenkungen in Querrichtung, d.h. in sämtlichen Richtungen quer, vorzugsweise normal zur axialen Richtung 19, bis zu einem gewissen Grad zuzulassen, ist der Durchmesser des bolzenförmigen Abschnitts 9 deutlich kleiner als der Durchmesser der Innenwand 8. Dies hat zur Folge, dass ein radialer Spalt 11 zwischen dem bolzenförmigen Abschnitt 9 und der Innenwand 8 ausgebildet wird, der die maximal mögliche Auslenkung in Querrichtung festlegt.

Eine größere Auslenkung in Querrichtung wird vorzugsweise durch die Kontaktierung der Innenwand 8 durch den bolzenförmigen Abschnitt 9 verhindert. Vorzugsweise beträgt eine radiale Breite 24 des Spalts 11 zwischen 20% und 60%, vorzugsweise zwischen 30% und 50%, insbesondere zwischen 35% und 45%, des Durchmessers der Innenwand 8. Vorzugsweise beträgt die radiale Breite 24 des Spalts 11 jedoch mindestens 2 mm. Bzw. beträgt ein Abstand zwischen dem bolzenförmigen Abschnitt 9 und der Innenwand 8 vorzugsweise mindestens 2 mm.

Die Lagerungselemente 5, 7 sind typischerweise aus Metall gefertigt. Wenn der bolzenförmige Abschnitt 9 bei der maximalen Auslenkung in Querrichtung an der Innenwand 8 anschlägt, kann dies zu erhöhter störender metallischer Geräuschentwicklung führen. Um diese störende Geräuschentwicklung beim Anschlagen des bolzenförmigen Abschnitts 9 an der Innenwand 8 zu reduzieren, ist die Innenwand 8 und/oder der bolzenförmige Abschnitt 9 vorzugsweise mit einer Schicht (nicht dargestellt) aus einem viskoelastischen Material versehen. Besonders bevorzugt ist das erste Lagerungselement 5 vollständig aus dem viskoelastischen Material oder einem flexiblen Material gefertigt. Hierdurch wird sichergestellt, dass die relativ geringe Quersteifigkeit des Federelements 1 nicht durch das erste Lagerungselement 5 negativ beeinflusst wird.

Um eine federnde Anbindung bzw. Lagerung der Antriebseinheit 6 an den bzw. am Lagerungsbereich 2 zu erzielen, ist in der in Fig. 2 gezeigten Ausführungsform das Federelement 1 sowohl am ersten Lagerungselement 5 als auch am zweiten Lagerungselement 7 fixiert. Hierzu ist eine kraftschlüssige Verbindung des Federelements 1 mit dem ersten Lagerungselement 5 hergestellt, indem das Federelement 1 über einen Befestigungsabschnitt 28 des ersten Lagerungselements 5 geschoben ist. Neben einem Kraftschluss, der durch die Eigenspannung des aufgeschobenen, dadurch radial etwas aufgeweiteten Federelements 1 gegeben ist, ist ein erster Endabschnitt 12 des Federelements 1 zwischen dem ersten Lagerungselement 5 und einem am ersten Lagerungselement 5 angeordneten Spannhülse 13 verspannt ist. Im Bereich des ersten Endabschnitts 12 des Federelements 1 umgibt die Spannhülse 13 das Federelement 1 und das erste Lagerungselement 5.

Weiters besteht auch eine kraftschlüssige Verbindung zwischen dem Federelement 1 und dem zweiten Lagerungselement 7, die im gezeigten Ausführungsbeispiel der Fig. 2 ausschließlich durch die Eigenspannung des Federelements 1 hergestellt ist. Hierzu ist das Federelement 1 mit einem zweiten Endabschnitt 25 über einen zweiten Endabschnitt 15 des zweiten Lagerungselements 7 geschoben bzw. durch die Eigenspannung des Federelements 1 gespannt. Auch in diesem Fall resultiert die Spannung des Federelements 1 aus einer gewissen elastischen Aufweitung des Federelements 1 - hier durch den zweiten Endabschnitt 15, der im Vergleich zum bolzenförmigen Abschnitt 9 einen wesentlich größeren Durchmesser aufweist.

Der zweite Endabschnitt 15 ist in an sich bekannter Weise mit dem Lagerungsbereich 2 verbunden. Zwischen dem bolzenförmigen Abschnitt 9 und dem zweiten Endabschnitt 15 ist ein Übergangsabschnitt 16 des zweiten Lagerungselements 7 angeordnet, in welchem sich der Durchmesser des zweiten Lagerungselements 7 vom Durchmesser des bolzenförmigen Abschnitts 9 zum Durchmesser des zweiten Endabschnitts 15 erweitert. Im Ausführungsbeispiel der Fig. 2 verläuft diese Erweiterung kontinuierlich monoton. Der resultierende glatte Übergang zwischen dem bolzenförmigen Abschnitt 9 und dem zweiten Endabschnitt 15 verhindert ein Verhaken und ermöglicht ein Abgleiten der beiden Lagerungselemente 5, 7 aneinander, falls es bei starken Auslenkungen zu einem Kontakt der beiden Lagerungselemente 5, 7 im Bereich des Übergangsabschnitt 16 kommt.

Um auch die Auslenkung in axialer Richtung 19 zu begrenzen, ist eine ebene erste Anschlagfläche 17 am ersten Endabschnitt 14 vorgesehen, welche den ersten Endabschnitt 14 in axialer Richtung 19 vom Lagerungsbereich 2 bzw. Gehäuseboden 4 weg weisend abschließt. Der ersten Anschlagfläche 17 gegenüberliegend ist eine zweite Anschlagfläche 18 angeordnet, die zum Gehäuseboden 4 weist und zur Kontaktierung der ersten Anschlagfläche 17 dient. Entsprechend wird die Auslenkung in axialer Richtung 19 begrenzt, wenn sich die Antriebseinheit 6 in Richtung Gehäuseboden 4 bewegt und das Federelement 1 auf Druck belastet wird. Im Ausführungsbeispiel der Fig. 2 ist die zweite Anschlagfläche 18 Teil der Antriebseinheit 6.

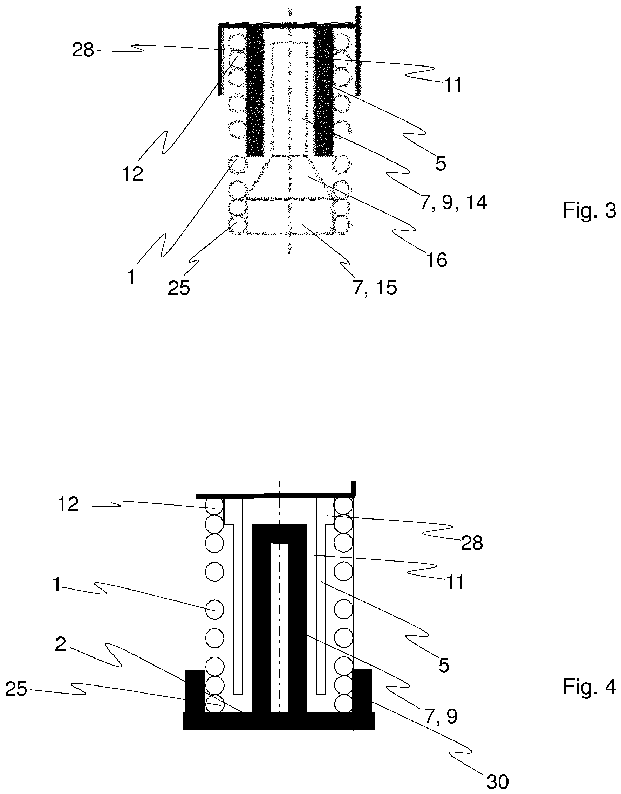

Die in Fig. 3 schematisch illustrierte Ausführungsform unterscheidet sich von der Ausführungsform der Fig. 2 vor allem dadurch, dass der Übergang zwischen dem bolzenförmigen Abschnitt 9 und dem Übergangsabschnitt 16 einerseits und zwischen dem Übergangsabschnitt 16 und dem zweiten Endabschnitt 15 andererseits nicht glatt, sondern mit Knicken ausgeführt ist, was eine einfachere Herstellung des zweiten Lagerungselements 7 gestattet.

Auch in der Ausführungsform der Fig. 3 ist das Federelement 1 kraftschlüssig mit den beiden Lagerungselementen 4, 7 verbunden. Es wird jedoch auf den Einsatz einer Spannhülse verzichtet. Stattdessen wird die Eigenspannung des Federelements 1 genutzt, das mit seinem ersten Endabschnitt 12 über den Befestigungsabschnitt 28 des ersten Lagerungselements 5 geschoben ist und mit seinem zweiten Endabschnitt 25 über den zweiten Endabschnitt 15 des zweiten Lagerungselements 7.

In der Ausführungsform der Fig. 4 wiederum wird auf einen Übergangsabschnitt 16 gänzlich verzichtet. Stattdessen ist im Wesentlichen das gesamte zweite Lagerungselement 7 bolzenförmig bzw. als bolzenförmiger Abschnitt 9 ausgeführt. In diesem Fall ist das Federelement 1 nur am ersten Lagerungselement 5 kraftschlüssig unter Ausnutzung der Eigenspannung des Federelements 1 befestigt. Hierzu ist das Federelement 1 mit seinem ersten Endabschnitt 12 über den Befestigungsabschnitt 28 des ersten Lagerungselements 5 geschoben. Der zweite Endabschnitt 25 des Federelements 1 ist hingegen in an sich bekannter Weise mit dem Lagerungsbereich 2 verbunden, beispielsweise mittels einer mit dem Lagerungsbereich 2 verschweißten Hülse 30, in welche das Federelement 1 eingepresst ist, wie in Fig. 4 dargestellt. Insgesamt ergibt sich somit wieder eine federnde Anbindung bzw. Lagerung der Antriebseinheit 6 an den bzw. am Lagerungsbereich 2.

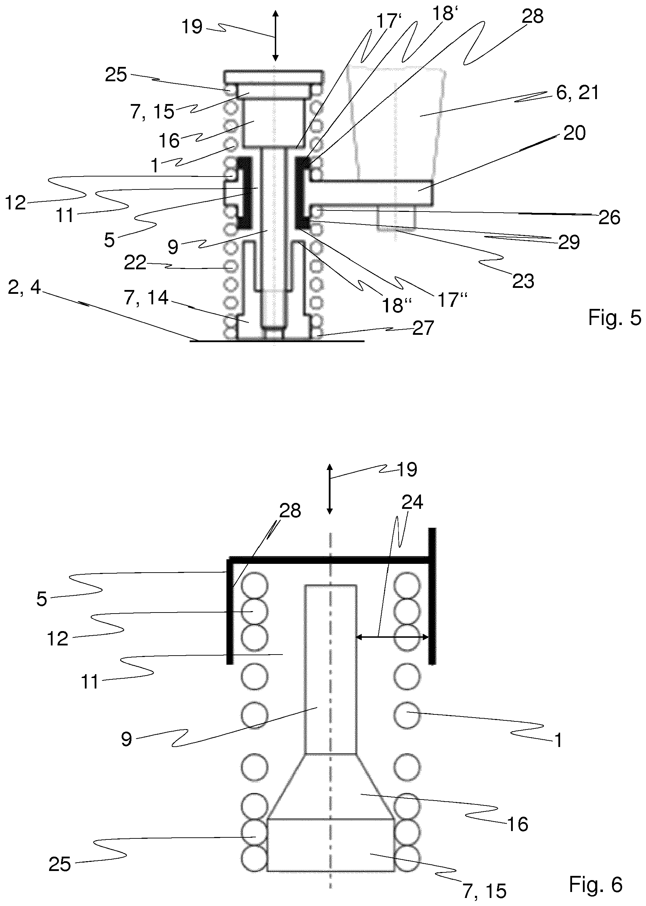

In der Ausführungsform der Fig. 5 ist der bolzenförmige Abschnitt 9 zwischen dem ersten Endabschnitt 14 und dem zweiten Endabschnitt 15 des zweiten Lagerungselements 7 ausgebildet. Beide Endabschnitte 14, 15 weisen einen größeren Durchmesser auf als der bolzenförmige Abschnitt 9. Dies ermöglicht die kraftschlüssige Verbindung eines weiteren Federelements 22 am zweiten Lagerungselement 7.

Konkret ist das Federelement 1 zwischen dem zweiten Endabschnitt 15 und dem ersten Lagerungselement 5 verspannt. Dabei ist das Federelement 1 mit seinem ersten Endabschnitt 12 über den Befestigungsabschnitt 28 des ersten Lagerungselements 5 geschoben, wobei aufgrund der Eigenspannung des Federelements 1 ein Kraftschluss zwischen dem ersten Lagerungselement 5 und dem Federelement 1 realisiert ist. Mit seinem zweiten Endabschnitt 25 ist das Federelement 1 über den zweiten Endabschnitt 15 des zweiten Lagerungselements 7 geschoben, wobei aufgrund der Eigenspannung des Federelements 1 ein Kraftschluss zwischen dem zweiten Endabschnitt 15 und dem Federelement 1 realisiert ist.

Analog ist das weitere Federelement 22 mit einem ersten Endabschnitt 26 über einen weiteren Befestigungsabschnitt 29 des ersten Lagerungselements 5 geschoben, wobei aufgrund der Eigenspannung des Federelements 1 ein Kraftschluss zwischen dem ersten Lagerungselement 5 und dem weiteren Federelement 22 realisiert ist. Mit einem zweiten Endabschnitt 27 ist das weitere Federelement 22 über den ersten Endabschnitt 14 des zweiten Lagerungselements 7 geschoben, wobei aufgrund der Eigenspannung des weiteren Federelements 22 ein Kraftschluss zwischen dem ersten Endabschnitt 14 und dem weiteren Federelement 22 realisiert ist.

Der weitere Befestigungsabschnitt 29 ist am ersten Lagerungselement 5 dem Befestigungsabschnitt 28 gegenüberliegend angeordnet. Die Anbindung des ersten Lagerungselements 5 an die Antriebseinheit 6 erfolgt mittels eines auskragenden Trägerelements 20 des ersten Lagerungselements 5. Das Trägerelement 20 ist dabei an einem Kurbelgehäuse 21 der Antriebseinheit 6 befestigt und vorzugsweise mittels einer Schraube 23 mit dem Kurbelgehäuse 21 verschraubt.

Das zweite Lagerungselement 7 ist mit seinem ersten Endabschnitt 14 am Lagerungsbereich 2 in an sich bekannter Weise fixiert.

Insgesamt ergibt sich somit eine Anordnung, in der der bolzenförmige Abschnitt 9 das erste Lagerungselement 5 vollständig durchquert. D.h. der Überlappungsbereich 10 erstreckt sich in axialer Richtung 19 über das gesamte erste Lagerungselement 5, was eine besonders hohe mechanische Stabilität gegenüber Auslenkungen in Querrichtung garantiert.

Diese Anordnung gestattet außerdem die Begrenzung der Auslenkung in axialer Richtung 19 - sowohl wenn sich die Antriebseinheit 6 auf den Gehäuseboden 4 zu bewegt als auch wenn sich die Antriebseinheit 6 vom Gehäuseboden weg bewegt. Um die Auslenkung der Antriebseinheit 6 in axialer Richtung 19 und auf den Gehäuseboden 4 zu zu begrenzen, sind erste Anschlagflächen 17' am zweiten Lagerungselement 7 und zweite Anschlagflächen 18' am ersten Lagerungselement 5 vorgesehen, die einander bei einer maximal zulässigen Auslenkung kontaktieren und größere Auslenkungen verhindern. Bei dieser Bewegung der Antriebseinheit 6 wird das Federelement 1 auf Zug belastet und das weitere Federelement 22 auf Druck.

Analog sind erste Anschlagflächen 17" am zweiten Lagerungselement 7 und zweite Anschlagflächen 18" am ersten Lagerungselement 5 vorgesehen, die einander bei einer maximal zulässigen Auslenkung kontaktieren und größere Auslenkungen verhindern, um die Auslenkung der Antriebseinheit 6 in axialer Richtung 19 und vom Gehäuseboden 4 weg zu begrenzen. Bei dieser Bewegung der Antriebseinheit 6 wird das Federelement 1 auf Druck belastet und das weitere Federelement 22 auf Zug.

Die Ausführungsform der Fig. 6 schließlich ist grundsätzlich analog zur Ausführungsform der Fig. 3 aufgebaut, wobei das Federelement 1 kraftschlüssig mit den beiden Lagerungselementen 4, 7 verbunden ist. Allerdings ist das Federelement 1 mit seinem ersten Endabschnitt 12 nicht über das erste Lagerungselement 5 geschoben, sondern in den Befestigungsabschnitt 28 des ersten Lagerungselements 5 hinein. Dabei wird der erste Endabschnitt 12 des Federelements 1 in radialer Richtung, also quer zur axialen Richtung 19, etwas zusammengestaucht, sodass das Federelement 1 aufgrund seiner Eigenspannung kraftschlüssig mit dem Befestigungsabschnitt 28 verspannt wird.

Bei der Ausführungsform der Fig. 6 ist daher das Federelement 1 abschnittsweise im Spalt 11 angeordnet. Entsprechend groß muss die Spaltbreite 24 sein, damit einerseits das Federelement 1 Platz findet und andererseits hinreichend Platz für Auslenkungen in Querrichtung verbleibt, bevor der bolzenförmige Abschnitt 9 gegen das Federelement 1 stößt. D.h. die maximale Auslenkung in Querrichtung wird durch die Kontaktierung des bolzenförmigen Abschnitts 9 mit dem Federelement 1 begrenzt.

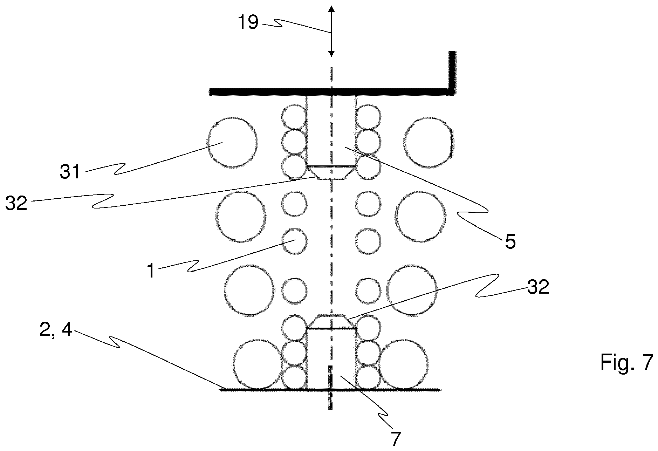

Die Darstellung der Fig. 7 betrifft ein alternatives Ausführungsbeispiel eines Kältemittelverdichters, welches in den Ansprüchen nicht erfasst ist. Hierbei umgibt das Federelement 1 beide Lagerungselemente 5, 7. Die Lagerungselemente 5, 7 sind im gezeigten Ausführungsbeispiel beide im Wesentlichen bolzenförmig ausgeführt, wobei die in axialer Richtung 19 gesehen freien Enden der Lagerungselemente 5, 7 eine Fase 32 aufweisen. Das Federelement 1 ist kraftschlüssig mit beiden Lagerungselementen 5, 7 verbunden.

Zur Aufnahme von Querkräften bei großen Auslenkungen der Antriebseinheit 6 in Querrichtung ist ein äußeres Federelement 31 vorgesehen, welches beide Lagerungselemente 5, 7 sowie das Federelement 1 umgibt und eine andere, vorzugsweise höhere Steifigkeit als das Federelement 1 aufweist. Indem das äußere Federelement 31 am Federelement 1 kraftschlüssig im Bereich des zweiten Lagerungselements 7 anliegt, ist das äußere Federelement 31 mit dem Lagerungsbereich 2 des Gehäuses 3 verbunden. Das äußere Federelement 31 ist darüberhinaus mit der Antriebseinheit 6 in an sich bekannter Weise verbunden. Das äußere Federelement 31 weist Windungen auf, die zwischen sich einen lichten Querschnitt ausbilden, sodass das äußere Federelement 31 das Federelement 1 und damit auch die Lagerungselemente 5, 7 umgeben kann. Dabei steht der lichte Querschnitt normal auf die axiale Richtung 19. Im gezeigten Ausführungsbeispiel ist das äußere Federelement 31 zudem so ausgelegt, dass der lichte Querschnitt in axialer Richtung 19 gesehen zunimmt. Hierdurch wird bewirkt, dass das äußere Federelement 31 vor allem bei großen Auslenkungen der Antriebseinheit 6 in Querrichtung anspricht und aktiv den Großteil der auftretenden Querkräfte aufnimmt. Das äußere Federelement 31 bewirkt sohin eine Entlastung des Federelements 1 gezielt bei großen Auslenkungen der Antriebseinheit 6 in Querrichtung. Gleichzeitig bewirkt das äußere Federelement 31 mit seiner erhöhten Steifigkeit eine Begrenzung der maximalen Auslenkung der Antriebseinheit 6 in Querrichtung. Bei geringen Auslenkungen der Antriebseinheit 6 in Querrichtung wird aufgrund der geringeren Steifigkeit des Federelements 1 trotzdem eine gute Dämpfung von Vibrationen und damit von störenden Geräuschen.

### BEZUGSZEICHENLISTE

1 Federelement
2 Lagerungsbereich
3 Gehäuse
4 Gehäuseboden
5 Erstes Lagerungselement
6 Antriebseinheit
7 Zweites Lagerungselement
8 Innenwand des ersten Lagerungselements
9 Bolzenförmiger Abschnitt des zweiten Lagerungselements
10 Überlappungsbereich
11 Radialer Spalt
12 Erster Endabschnitt des Federelements
13 Spannhülse
14 Erster Endabschnitt des zweiten Lagerungselements
15 Zweiter Endabschnitt des zweiten Lagerungselements
16 Übergangsabschnitt des zweiten Lagerungselements
17, 17', 17" Erste Anschlagfläche
18, 18', 18" Zweite Anschlagfläche
19 Axiale Richtung
20 Trägerelement
21 Kurbelgehäuse
22 Weiteres Federelement
23 Schraube
24 Radiale Spaltbreite
25 Zweiter Endabschnitt des Federelements
26 Erster Endabschnitt des weiteren Federelements
27 Zweiter Endabschnitt des weiteren Federelements
28 Befestigungsabschnitt des ersten Lagerungselements
29 Weiterer Befestigungsabschnitt des ersten Lagerungselements
30 Mit dem Lagerungsbereich verschweißte Hülse
31 Äußeres Federelement
32 Fase

## Patentansprüche

1. Kältemittelverdichter, umfassend ein hermetisch dichtes Gehäuse (3) sowie eine Antriebseinheit (6) mit einer Kolben-Zylinder-Einheit zur zyklischen Verdichtung eines Kältemittels und einem Elektromotor zum Antrieb der Kolben-Zylinder-Einheit; wobei die Antriebseinheit (6) im Inneren des Gehäuses (3) angeordnet ist und mittels mindestens eines Federelements (1, 22) an mindestens einem Lagerungsbereich (2) des Gehäuses (3), vorzugsweise am Gehäuseboden (4), lagernd angebunden ist; wobei ein erstes Lagerungselement (5) und ein zweites Lagerungselement (7) vorgesehen sind; wobei eines der beiden Lagerungselemente (5, 7) mit der Antriebseinheit (6) und das andere der beiden Lagerungselemente (7, 5) mit dem Lagerungsbereich (2) verbunden ist; und wobei das erste Lagerungselement (5) und/oder das zweite Lagerungselement (7) von dem mindestens einen Federelement (1, 22) umgeben sind; **dadurch gekennzeichnet, dass** das erste Lagerungselement (5) hülsenförmig ausgebildet ist und eine Innenwand (8) aufweist und das zweite Lagerungselement (7) einen bolzenförmigen Abschnitt (9) aufweist, wobei der bolzenförmige Abschnitt (9) zumindest abschnittsweise im ersten Lagerungselement (5) aufgenommen ist, wodurch ein Überlappungsbereich (10) ausgebildet ist, in welchem Überlappungsbereich (10) ein Spalt (11) zwischen dem bolzenförmigen Abschnitt (9) des zweiten Lagerungselements (7) und der Innenwand (8) des ersten Lagerungselements (5) ausgebildet ist, und wobei die Innenwand (8) des ersten Lagerungselements (5) und/oder der bolzenförmige Abschnitt (9) zumindest abschnittsweise mit einer viskoelastischen Schicht versehen sind.

2. Kältemittelverdichter nach Anspruch 1, **dadurch gekennzeichnet, dass** der Spalt (11) zwischen 20% und 60%, vorzugsweise zwischen 30% und 50%, insbesondere zwischen 35% und 45%, des Durchmessers der Innenwand (8) einnimmt.

3. Kältemittelverdichter nach Anspruch 1 oder 2, **dadurch gekennzeichnet, dass** das erste Lagerungselement (5) zumindest abschnittsweise kraftschlüssig mit dem Federelement (1) verbunden ist.

4. Kältemittelverdichter nach einem der Ansprüche 1 bis 3, **dadurch gekennzeichnet, dass** ein erster Endabschnitt (12) des Federelements (1) zwischen dem ersten Lagerungselement (5) und einer am ersten Lagerungselement (5) angeordneten Spannhülse (13) verspannt ist.

5. Kältemittelverdichter nach einem der Ansprüche 1 bis 4, **dadurch gekennzeichnet, dass** der bolzenförmige Abschnitt (9) von einem ersten Endabschnitt (14) des zweiten Lagerungselements (7) ausgebildet ist, wobei ein zweiter Endabschnitt (15) des zweiten Lagerungselements (7) einen im Vergleich zum bolzenförmigen Abschnitt (9) größeren Durchmesser aufweist.

6. Kältemittelverdichter nach Anspruch 5, **dadurch gekennzeichnet, dass** das zweite Lagerungselement (7) einen Übergangsabschnitt (16) aufweist, welcher zwischen dem bolzenförmigen Abschnitt (9) und dem zweiten Endabschnitt (15) angeordnet ist, in welchem Übergangsabschnitt (16) sich der Durchmesser von einem kleinsten Wert im Bereich des bolzenförmigen Abschnitts (9), vorzugsweise konisch, monoton bis zu einem größten Wert im Bereich des zweiten Endabschnitts (15) des zweiten Lagerungselements (7) vergrößert.

7. Kältemittelverdichter nach Anspruch 5 oder 6, **dadurch gekennzeichnet, dass** der zweite Endabschnitt (15) des zweiten Lagerungselements (7) kraftschlüssig mit dem Federelement (1) verbunden ist.

8. Kältemittelverdichter nach einem der Ansprüche 5 bis 7, **dadurch gekennzeichnet, dass** der erste Endabschnitt (14) des zweiten Lagerungselements (7) durch eine, vorzugsweise ebene, erste Anschlagfläche (17) zum Kontakt mit einer zweiten Anschlagsfläche (18) in axialer Richtung (19) begrenzt ist.

9. Kältemittelverdichter nach Anspruch 8, **dadurch gekennzeichnet, dass** die zweite Anschlagsfläche (18) vom ersten Lagerungselement (5) oder von der Antriebseinheit (6) ausgebildet ist, wobei die erste Anschlagsfläche (17) und die zweite Anschlagsfläche (18) in einer Betriebsposition voneinander beabstandet sind.

10. Kältemittelverdichter nach einem der Ansprüche 1 bis 3, **dadurch gekennzeichnet, dass** ein erstes Federelement (1) zwischen einem zweiten Endabschnitt (15) des zweiten Lagerungselements (7) und dem ersten Lagerungselement (5) verspannt ist, dass ein zweites Federelement (22) zwischen einem ersten Endabschnitt (14) des zweiten Lagerungselements (7) und dem ersten Lagerungselement (5) verspannt ist und dass der bolzenförmige Abschnitt (9) in einem zwischen dem erstem Endabschnitt (14) und dem zweitem Endabschnitt (15) liegenden Abschnitt ausgebildet ist.

11. Kältemittelverdichter nach Anspruch 10, **dadurch gekennzeichnet, dass** das erste Lagerungselement (5) in axialer Richtung vollständig vom bolzenförmigen Abschnitt (9) durchquert ist.

12. Kältemittelverdichter nach Anspruch 10 oder 11, **dadurch gekennzeichnet, dass** das erste Lagerungselement (5) ein auskragendes Trägerelement (20) aufweist, welches Trägerelement (20) mit der Antriebseinheit (6) verbunden ist.

13. Kältemittelverdichter nach einem der Ansprüche 1 bis 12, **dadurch gekennzeichnet, dass** das erste Lagerungselement (5) aus einem viskoelastischen oder flexiblen Material gefertigt ist.

## Claims

1. Refrigerant compressor, comprising a hermetically sealed housing (3) and a drive unit (6) having a piston/cylinder unit for cyclical compression of a refrigerant and an electric motor for drive of the piston/cylinder unit; wherein the drive unit (6) is disposed in the interior of the housing (3) and is attached to at least one mounting region (2) of the housing (3), preferably at the housing bottom (4), with mounting action, by means of at least one spring element (1, 22); wherein a first mounting element (5) and a second mounting element (7) are provided; wherein one of the two mounting elements (5, 7) is connected with the drive unit (6) and the other one of the two mounting elements (7, 5) is connected with the mounting region (2); and wherein the first mounting element (5) and/or the second mounting element (7) is/are surrounded by the at least one spring element (1, 22); **characterized in that** the first mounting element (5) is configured in sleeve shape and has an inner wall (8), and the second mounting element (7) has a bolt-shaped section (9), wherein the bolt-shaped section (9) is accommodated, at least in sections, in the first mounting element (5), thereby forming an overlap region (10), in which overlap region (10) a gap (11) is formed between the bolt-shaped section (9) of the second mounting element (7) and the inner wall (8) of the first mounting element (5), and wherein the inner wall (8) of the first mounting element (5) and/or the bolt-shaped section (9) is/are provided with a viscoelastic layer, at least in sections.

2. Refrigerant compressor according to claim 1, **characterized in that** the gap (11) takes up between 20% and 60%, preferably between 30% and 50%, particularly between 35% and 45% of the diameter of the inner wall (8) .

3. Refrigerant compressor according to claim 1 or 2, **characterized in that** the first mounting element (5) is connected with the spring element (1) with force fit, at least in sections.

4. Refrigerant compressor according to one of claims 1 to 3, **characterized in that** a first end section (12) of the spring element (1) is braced between the first mounting element (5) and a clamping sleeve (13) disposed on the first mounting element (5).

5. Refrigerant compressor according to one of claims 1 to 4, **characterized in that** the bolt-shaped section (9) is formed by a first end section (14) of the second mounting element (7), wherein a second end section (15) of the second mounting element (7) has a greater diameter in comparison with the bolt-shaped section (9).

6. Refrigerant compressor according to claim 5, **characterized in that** the second mounting element (7) has a transition section (16) that is disposed between the bolt-shaped section (9) and the second end section (15), in which transition section (16) the diameter increases monotonically, preferably conically, from a smallest value in the region of the bolt-shaped section (9) to a greatest value in the region of the second end section (15) of the second mounting element (7).

7. Refrigerant compressor according to claim 5 or 6, **characterized in that** the second end section (15) of the second mounting element (7) is connected with the spring element (1) with force fit.

8. Refrigerant compressor according to one of claims 5 to 7, **characterized in that** the first end section (14) of the second mounting element (7) is delimited in axial direction (19) by a, preferably planar, first stop surface (17) for contact with a second stop surface (18).

9. Refrigerant compressor according to claim 8, **characterized in that** the second stop surface (18) is formed by the first mounting element (5) or by the drive unit (6), wherein the first stop surface (17) and the second stop surface (18) are spaced apart from one another in an operating position.

10. Refrigerant compressor according to one of claims 1 to 3, **characterized in that** a first spring element (1) is braced between a second end section (15) of the second mounting element (7) and the first mounting element (5), that a second spring element (22) is braced between a first end section (14) of the second mounting element (7) and the first mounting element (5), and that the bolt-shaped section (9) is formed in a section that lies between the first end section (14) and the second end section (15).

11. Refrigerant compressor according to claim 10, **characterized in that** the bolt-shaped section (9) passes completely through the first mounting element (5) in axial direction.

12. Refrigerant compressor according to claim 10 or 11, **characterized in that** the first mounting element (5) has a projecting support element (20), which support element (20) is connected with the drive unit (6).

13. Refrigerant compressor according to one of claims 1 to 12, **characterized in that** the first mounting element (5) is produced from a viscoelastic or flexible material.

## Revendications

1. Compresseur à réfrigérant comprenant un boîtier (3) hermétique et une unité d'entraînement (6) avec une unité de piston et cylindre pour la compression cyclique d'un réfrigérant et avec un moteur électrique pour l'entraînement de l'unité de piston et cylindre, dans lequel l'unité d'entraînement (6) est disposée à l'intérieur du boîtier (3) et fixée en appui sur au moins une zone d'appui (2) du boîtier (3), de préférence sur le fond du boîtier (4), au moyen d'au moins un élément de ressort (1, 22), dans lequel un premier élément d'appui (5) et un deuxième élément d'appui (7) sont prévus, dans lequel l'un des deux éléments d'appui (5, 7) est relié à l'unité d'entraînement (6) et l'autre des deux éléments d'appui (7, 5) à la zone d'appui (2) et dans lequel le premier élément d'appui (5) et/ou le deuxième élément d'appui (7) sont entourés par l'au moins un élément de ressort (1, 22), **caractérisé en ce que** le premier élément d'appui (5) est en forme de douille et présente une paroi intérieure (8) et le deuxième élément d'appui (7) présente une partie en forme de boulon (9), laquelle partie en forme de boulon (9) est logée au moins en partie dans le premier élément d'appui (5), ce qui crée une zone de chevauchement (10), un interstice (11) étant formé dans la zone de chevauchement (10) entre la partie en forme de boulon (9) du deuxième élément d'appui (7) et la paroi intérieure (8) du premier élément d'appui (5), et la paroi intérieure (8) du premier élément d'appui (5) et/ou la partie en forme de boulon (9) étant munis au moins en partie d'une couche viscoélastique.

2. Compresseur à réfrigérant selon la revendication 1, **caractérisé en ce que** l'interstice (11) occupe entre 20 % et 60 %, de préférence entre 30 % et 50 %, en particulier entre 35 % et 45 % du diamètre de la paroi intérieure (8).

3. Compresseur à réfrigérant selon la revendication 1 ou 2, **caractérisé en ce que** le premier élément d'appui (5) est relié au moins en partie par adhérence à l'élément de ressort (1).

4. Compresseur à réfrigérant selon l'une des revendications 1 à 3, **caractérisé en ce qu'**une première partie d'extrémité (12) de l'élément de ressort (1) est serrée entre le premier élément d'appui (5) et une douille de serrage (13) disposée sur le premier élément d'appui (5).

5. Compresseur à réfrigérant selon l'une des revendications 1 à 4, **caractérisé en ce que** la partie en forme de boulon (9) est formée par une première partie d'extrémité (14) du deuxième élément d'appui (7), une deuxième partie d'extrémité (15) du deuxième élément d'appuis (7) présentant un plus grand diamètre que la partie en forme de boulon (9).

6. Compresseur à réfrigérant selon la revendication 5, **caractérisé en ce que** le deuxième élément d'appui (7) présente une partie de transition (16) disposée entre la partie en forme de boulon (9) et la deuxième partie d'extrémité (15), le diamètre augmentant dans cette partie de transition (16) d'un minimum au niveau de la partie en forme de boulon (9) de façon monotone, de préférence de façon conique, jusqu'à un maximum au niveau de la deuxième partie d'extrémité (15) du deuxième élément d'appui (7).

7. Compresseur à réfrigérant selon la revendication 5 ou 6, **caractérisé en ce que** la deuxième partie d'extrémité (15) du deuxième élément d'appuis (7) est reliée par adhérence à l'élément de ressort (1).

8. Compresseur à réfrigérant selon l'une des revendications 5 à 7, **caractérisé en ce que** la première partie d'extrémité (14) du deuxième élément d'appui (7) est délimitée par une première surface de butée (17), de préférence plane, destinée à venir en contact avec une deuxième surface de butée (18) dans le sens axial (19).

9. Compresseur à réfrigérant selon la revendication 8, **caractérisé en ce que** la deuxième surface de butée (18) est formée par le premier élément d'appui (5) ou par l'unité d'entraînement (6), la première surface de butée (17) et la deuxième surface de butée (18) étant écartées l'une de l'autre dans une position de fonctionnement.

10. Compresseur à réfrigérant selon l'une des revendications 1 à 3, **caractérisé en ce qu'**un premier élément de ressort (1) est serré entre une deuxième partie d'extrémité (15) du deuxième élément d'appui (7) et le premier élément d'appui (5), **en ce qu'**un deuxième élément de ressort (22) est serré entre une première partie d'extrémité (14) du deuxième élément d'appui (7) et le premier élément d'appui (5) et **en ce que** la partie en forme de boulon (9) est formée dans une partie située entre la première partie d'extrémité (14) et la deuxième partie d'extrémité (15).

11. Compresseur à réfrigérant selon la revendication 10, **caractérisé en ce que** le premier élément d'appui (5) est entièrement traversé dans le sens axial par la partie en forme de boulon (9).

12. Compresseur à réfrigérant selon la revendication 10 ou 11, **caractérisé en ce que** le premier élément d'appui (5) présente un élément portant (20) évasé, lequel élément portant (20) est relié à l'unité d'entraînement (6).

13. Compresseur à réfrigérant selon l'une des revendications 1 à 12, **caractérisé en ce que** le premier élément d'appui (5) est fabriqué d'un matériau viscoélastique ou flexible.
